# EUROPEAN PATENT APPLICATION

(11) **EP 4 803 411 A1**
(43) Date of publication of application: **09.09.2026**
(21) Application number: 25161434.3
(22) Date of filing: 03.03.2025
(51) Int. Cl.: B62M 6/55, B62M 6/60, B62M 11/14, B62M 11/16, B62M 11/18

(54) **POWERTRAIN FOR A PEDAL VEHICLE, METHOD, PEDAL VEHICLE AND USE**

(71) Applicant: intuEdrive BV, 3360 Bierbeek (BE)
(72) Inventor: Keppens, Tomas, B-2800 Mechelen (BE)
(74) Representative: Oryon NV

(57) **Abstract**

The invention relates to a powertrain (10) for a pedal vehicle (1), comprising
a three-way power split device (20) with a first (21), a second (22) and a third (23) interface,
a motor (2) configured to rotate in a first and in a second rotational direction,
a driver (11) connected to the motor (2) and connected, by means of a first unidirectional clutch arrangement (31), to the first interface (21) to which an output structure (15) is connected such that the motor (2) can exert torque on the first interface (21) only by rotation in the first rotational direction, wherein the driver (11) is connected, by means of a second unidirectional clutch arrangement (32), to the second interface (22) such that the motor (2) can exert torque on the second interface (22) only by rotation in the second rotational direction,
a further driver (12) connected to a pedal crank structure (13) and to the third interface (23), wherein the pedal crank structure (13) is configured to receive a user torque input and forward the user torque input to the third interface (23) in the first rotational direction, and
a third unidirectional clutch arrangement (33) arranged in the powertrain (10) such that the user torque input can exert torque on the first interface (21) in the first rotational direction with the third unidirectional clutch arrangement (33) being locked.

## Description

The invention relates to a powertrain for a pedal vehicle, comprising a three-way power split device, a driver connected to a motor and to the power split device, and a further driver connected to a pedal crank structure and to the power split device.

Motorized powertrains for pedal vehicles are known in the art. The adoption of three-way power split devices is also known. For example, the motor can be used to provide a CVT-like gearbox. However, it remains a challenge to provide an ergonomic user experience in difference terrains, e.g. when different support levels are required and the user wants to have a comfortable cadence.

It is an object of the invention to provide solutions related to a powertrain enhanced with respect to agility in adapting support level and realizing suitable cadence. Particularly, it is an object to avoid or reduce disadvantages of known solutions.

The above objects are solved by means of the features of the independent claims. Preferred features are mentioned in the description and the dependent claims.

Particularly, the object is solved by means of a powertrain for a pedal vehicle, comprising
a motor configured to rotate in a first rotational direction and/or in a second rotational direction,
a three-way power split device with a first, a second and a third interface,
a driver connected to a motor and connected, by means of a first unidirectional clutch arrangement, to the first interface to which an output structure is connected such that the motor can exert torque on the first interface, e.g. substantially directly and/or involving a gear reduction that may depend on the direction of rotation on the first interface, only in a first rotational direction, wherein the driver is connected, by means of a second unidirectional clutch arrangement, to the second interface such that the motor can exert torque on the second interface, e.g. substantially directly on the second interface, only in a second rotational direction,
a further driver connected to a pedal crank structure and to the third interface, wherein the pedal crank structure is configured to receive a user torque input and forward the user torque input to the third interface in the first or second rotational direction, and
a third unidirectional clutch arrangement arranged in the powertrain such that the user torque input can exert torque on the first interface in the first or second rotational direction, particularly by means of the third unidirectional clutch arrangement and/or with the third unidirectional clutch arrangement being locked.

In other words, particularly, a powertrain for a pedal vehicle is suggested, the powertrain having a power split device, or PSD for short, with at least three interfaces and at least three freewheel clutches interacting with the power split device and with a motor powering the powertrain. A first clutch may be arranged to interact substantially between a first interface, the first interface substantially providing an output of the powertrain, and the motor, the first clutch transmitting torque only in a positive or a first rotational direction. A second clutch may be arranged to interact substantially between a second interface and the motor, the second clutch transmitting torque only in a negative or a second rotational direction that may be opposite the first rotational direction. A third clutch may be arranged to interact substantially with a pedal input and a third interface, directly or indirectly, the third clutch also transmitting torque only in one of the first and the second directions.

The invention provides a novel approach for a powertrain with a power split device powered by a motor. The novel idea involves that a mode of operation can be chosen as a function of the direction of rotation of the motor. A specific arrangement of three or more unidirectional clutches within the powertrain makes that possible. The motor can substantially directly provide torque or power to an output structure when running in one direction thus providing a parallel mode or parallel hybrid mode. Further, the motor can directly affect the gear ratio and provide a CVT-like function or PSD mode to affect the cadence among providing assistance torque or power when running in the other direction.

'CVT' stands for continuous variable transmission. Such a transmission is known in the art. For example, a CVT can change a gear ratio without steps or steplessly. Generally, 'CVT-like' is meant in the sense that a gear ratio may be changed without steps/steplessly.

The agility of the powertrain is enhanced. For example, when direct assistance of the motor is needed, the motor can run in a parallel mode, wherein torque is substantially directly transmitted to the output structure. Also, the motor can run in a PSD mode, wherein gear ratio, cadence and/or support level can be controlled. The modes can easily be chosen by the direction of rotation of the motor. The PSD mode may be provided to affect a gear ratio between pedal crank structure and wheel hub, to affect cadence, and/or to affect support level.

The powertrain may not need more than one motor, i.e. may have only the motor and/or may be provided substantially as a single motor application. The powertrain may provide that complexity and cost can be reduced, e.g. when the motor is substantially the only motor that may be used to provide assistance or propulsion. Particularly, in the parallel mode a motor torque or power may be directed substantially directly to the output structure and typically not via the power split device; a gear ratio between the motor and the output structure may be substantially fixed; optionally, transmission means may affect said gear ratio.

Particularly, in the PSD mode a motor torque or power may be directed substantially indirectly to the output structure and typically via the power split device; a gear ratio between the motor and the output structure may be variable particularly depending on the motor speed and the speed of the pedal crank structure or second input structure; optionally, transmission means may affect said gear ratio.

The pedal vehicle, especially the bicycle, substantially refers to a vehicle with at least two wheels, especially with at least one driven wheel to be driven via the wheel hub. The pedal vehicle may comprise at least one front wheel hub. The pedal vehicle may comprise at least one rear wheel hub. For example, the pedal vehicle may comprise two wheels (a typical bicycle arrangement with a steered front wheel) three wheels (e.g. trike-like with a front wheel and two rear wheels, with the front wheel and/or rear wheels steered) or four wheels (e.g. car-like with two front and two rear wheels, with at least the front or rear wheels steered). The pedal vehicle is meant as a vehicle to be driven at least partially by means of pedals on pedal cranks. As a common construction, the pedal cranks are mounted directly on the pedal crank structure.

The pedal vehicle is typically meant as an electrically assisted pedal vehicle and/or hybrid vehicle, for example powered by means of both electricity and human power driving the wheel hub(s). The pedal vehicle may be a handbike or handcycle, i.e. driven at least partially by arms and/or hands.

The user torque input, or input torque for short, is typically understood as the torque the user may apply to pedal cranks stepping continuously thereupon which torque is present at the pedal crank structure. The input torque multiplied by the cadence and/or rotational frequency of the pedal cranks / the pedal crank structure translates to an input power or power. The powertrain may transfer the input torque at least partially or fully to the wheel hub. The powertrain may receive the input torque and/or input power. The powertrain may store and/or split and/or transmit and/or direct the input torque/power to the output structure or wheel hub, at least in part and/or at least time-delayed. The user is typically understood as a human which can apply the input torque by means of his legs and/or arms.

The motor is meant to be understood as an arrangement and/or system comprising at least one motor and/or drive, especially a plurality thereof. More than two motors may be provided. The motors may be similar, especially similar in terms of function (rotational movement, translational movement, combinations thereof, or the like). The motor may be an electrical motor, for example a direct current drive or motor. The motor may be configured to provide a torque and/or revolution speed, especially in a controllable manner. The motor may be able to recuperate electrical energy, i.e. work as a generator, e.g. by means of rotating the motor human power input or from input from the output structure in order to brake the pedal vehicle or the like.

The terms 'connected', 'connecting', 'coupling', 'coupled to', 'coupled with', etc. substantially refer to coupling in a mechanical sense. Said terms typically include and/or imply, but are not limited to, motion-coupled and/or rotationally coupled in order to transfer and/or affect movements based on the coupling.

The pedal crank structure typically comprises or consists of a shaft or pedal crank shaft, especially the shaft configured for connecting/coupling two pedal cranks on opposite sides of the shaft. The pedal cranks are typically arranged substantially in parallel to each other. The pedal cranks are typically arranged oblique, especially substantially perpendicular, to the pedal crank shaft. The pedal cranks especially point in substantially opposite directions. The pedal crank shaft is preferably a metal shaft, especially made of steel or aluminum. The pedal crank shaft is preferably a monolithically shaped structure. The pedal crank shaft is typically configured for a separate attachment of the pedal cranks. The invention may provide that a pedal crank structure with different configurations can be realized, for example with pedal or pedals only on one side.

The term 'torque transmission' or 'torque transfer' typically means and/or implies that a rotational connection is given in that torque and especially mechanical power (torque multiplied by revs) or power can be transmitted between two components.

A battery or a battery dock for a battery may be provided, e.g. as a part of the pedal vehicle and/or of the powertrain. The battery may serve to store and to provide electrical energy, especially for driving/controlling the motor. Energy may be stored in the battery, which energy can be provided by means of recuperation or by means of charging the battery. The battery may be removable from the pedal vehicle e.g. for charging the battery.

In the context of cycling, cadence typically refers to the rate at which a cyclist or user pedals. More precisely, it's the number of revolutions of the pedal crank structure per minute. The cadence is akin to the rhythm of pedalling. Cadence is often measured in revolutions per minute, or RPM. For example, a cadence of 60 RPM means that one pedal completes a full circle 60 times in a minute. Different users have different preferred or ergonomically optimal cadences, depending on their fitness level, the type of cycling they are doing (for example, road cycling, mountain biking, or time trialling), and personal preference.

The three-way power split device, or power split device for short, has a first interface, a second interface and a third interface. For example, the three interfaces interact with one another so that a torque or power input to one interface can provide a torque or power output to the other two interfaces. A torque or power input to two interfaces can provide a torque or power output to the remaining interface. The power split device can be used as a CVT-like gear box between two interfaces when the motor acts with a variable rotational speed on the third interface.

The unidirectional clutch arrangement relates to at least one unidirectional clutch or more than one. A unidirectional clutch, e.g. one-way clutch, overrunning clutch, roller clutch, or freewheel clutch, typically is a mechanical device designed to transmit torque in one direction while inhibiting torque transmission in the opposite direction. The unidirectional clutch can operate by engaging when rotated in one direction and disengaging to allow no torque transmission or overrunning when rotated in the other direction. For example, roller clutches may use cylindrical rollers positioned between an inner and an outer race; when rotated in a driving direction, the rollers wedge against the races to transmit torque.

The unidirectional clutch arrangement may include a bearing or may be provided as a one-way bearing. The unidirectional clutch may provide a unidirectional clutch and a bearing, particularly in an integrated manner.

The driver and the further driver typically rotate at least in part in parallel to one another, especially coaxially. Two or all of the interfaces of the power split device may rotate at least in part in parallel to one another, especially coaxially. Particularly, the driver, the further driver, the three interfaces, and optionally the output structure, the pedal crank structure, and/or the unidirectional clutch arrangements, may at least in part rotate in parallel to one another, especially coaxially, and/or may be rotatably arranged relative to one another by means of at least one bearing.

A/the bearing or two or more bearings may be provided to provide rotatable arrangements or connections. The driver and/or the further driver may be rotatably arranged on the frame member and/or on at least one of the interfaces, e.g. by means of (the) bearing or (the) two or more bearings. The interfaces may be rotatably arranged on the frame member and/or on one another. The output structure may be rotatably arranged on the driver, the further driver, and/or on at least one of the interfaces.

The driver is connected or coupled to the motor, e.g. the motor may be attached or coupled to the driver, particularly directly. The driver is connected or coupled to the first interface of the power split device via the first unidirectional clutch arrangement. The output structure, e.g. a sprocket or a wheel hub, may be connected or coupled to the first interface, particularly directly. The motor can exert torque on the first interface via the driver and the (first) unidirectional clutch arrangement in the first rotational direction, e.g. the rotation of the motor resulting in a direct or proportional rotation of the output structure.

The driver is connected or coupled to the second interface of the power split device via the second unidirectional clutch arrangement. The second unidirectional clutch arrangement typically transmits torque in the second rotational direction that is opposite the first rotational direction. As such, the motor can exert torque on the second interface only in a second rotational direction.

The further driver is connected or coupled to the pedal crank structure, particularly directly. The further driver is connected or coupled to the third interface of the power split device, e.g. directly or indirectly, e.g. via the third or a fourth unidirectional clutch arrangement. The pedal crank structure is configured to receive or can receive a user torque input and forward the user torque input to the third interface in the first rotational direction.

The third unidirectional clutch arrangement is arranged in the powertrain such that the user torque input can exert torque on the first interface in the first rotational direction, e.g. with the third unidirectional clutch arrangement being locked and/or via the third unidirectional clutch arrangement. That is, the third unidirectional clutch may be arranged to transmit torque between the first and the third interface or may be arranged to transmit torque between a typically fixed frame member and the second interface. Other configurations of unidirectional clutch arrangement may be possible.

In the following, implementations of the invention are described. The implementations may be combined or considered individually. Specific aspects/features described in the context of any of the implementations may be considered individually or in combination. The implementations pursue further optimization of the invention and provide advantages as described herein.

It may be provided that the third unidirectional clutch arrangement is configured for transmitting torque, which torque can at least partially be based on the user torque input, to the first interface. The third unidirectional clutch arrangement is particularly arranged for connection between the third interface and the first interface. For example, the third unidirectional clutch arrangement can transmit torque only in the first rotational direction. That is, the third unidirectional clutch arrangement may transmit torque to the first interface and thus to the output structure, especially when user torque input is provided in the first rotational direction.

It may be provided that the third unidirectional clutch arrangement is configured for transmitting torque, which torque can at least partially be based on the user torque input, to a/the frame member of the powertrain. The second interface may be connected to the frame member by means of the third unidirectional clutch arrangement. For example, the third unidirectional clutch arrangement can transmit torque only in the second rotational direction. That is, the third unidirectional clutch arrangement may transmit torque to the frame member and/or stand still, especially when user torque input is provided in the first rotational direction. With respect to said configuration, the outcome in practice whether the torque transmitted to the frame member is in the first or the second direction may depend on the overall design of the power split device, e.g. a connection between the first, the second, and the third interfaces. For example, the power split device possibly including a planetary gearbox brings in the fact that a planet carrier always has an opposite torque of sun gear and ring gear.

The power split device may include or may be a planetary gearbox. The first interface can include or be a ring gear. The second interface can include or be a sun gear. The third interface can include or be a planet carrier holding planet gears, e.g. two or three or more planet gears, which planet gears mesh with the ring gear and the sun gear. The frame member may provide support for the power split device, particularly for the planetary gearbox. The frame member may be at least substantially surrounded by the power split device. For example, the second interface may be rotatably mounted on the frame member, particularly interacting with the third unidirectional clutch arrangement. The planetary gearbox may provide a compact design.

The powertrain may comprise a fourth unidirectional clutch arrangement. The fourth unidirectional clutch may at least substantially connect the pedal crank structure and/with the third interface. The fourth unidirectional clutch arrangement may connect the further driver and/with the third interface, e.g. such that the user torque input can be directed only in the first rotational direction. Particularly, the fourth unidirectional clutch arrangement may provide that user torque input can be transmitted to the third interface only in the first rotational direction, substantially enabling coasting without a torque transmitted back to the pedal crank structure.

The motor may be arranged external to the output structure. The motor may be connected by means of a transmission means, such as gears, a chain or a belt, to the driver. The transmission means may provide a certain gear ratio, especially only the certain gear ratio or a fixed gear ratio. The transmission means may typically provide a direct connection in that input and output rotate simultaneously at any time, while torque and rotational speed may be transformed. The motor may be arranged at a more convenient location by being arranged externally. For example, the motor may rotate in parallel to the power split device, but may not rotate coaxial thereto.

The transmission means connecting the motor to the driver may be configured to change the effective gear ratio depending on the direction of rotation. For example, in a forward/first direction, a different gear ratio may be effective relative to a backward/second rotation.

The transmission means that connects the motor to the driver may include at least two gears to be selected. As such, the motor may be connected to the driver by at least two different gear ratios. The powertrain may be configured such that the user can select from the at least two gears or that the at least two gears are selected automatically.

The motor may be arranged integrated with or in the output structure. The motor, e.g. a stator or a rotor thereof, may be coupled to the output structure. The motor may be housed at least in part in the powertrain, particularly the output structure. The motor may be configured as a hub motor.

The output structure may be connected or connectable by means of a further transmission means, such as gears, a chain or a belt, to a wheel hub. The further transmission means may provide a certain gear ratio, especially only the certain gear ratio or a fixed gear ratio. The further transmission may typically provide a direct connection in that input and output rotate simultaneously at any time, while torque and rotational speed may be transformed.

The further transmission means may include at least two gears to be selected. As such, the output structure may be connected to the wheel hub by at least two different gear ratios. The powertrain may be configured such that the user can select from the at least two gears or that the at least two gears are selected automatically.

At least one first gear stage may be arranged for connection between the output structure and a wheel hub. The at least one first gear stage may be configured for providing at least one gear ratio that is different to 1. The at least one first gear stage may be configured for providing a plurality of gear ratios, e.g. two gears, three gears, or more, to be selected. For example, another gearbox or shifting mechanism may be provided between the output structure and a driven wheel hub of the pedal vehicle. This means that a greater variety of use scenarios can be realized.

At least one second gear stage may be arranged to connect at least two of: the pedal crank structure, the third interface, and the further driver. The at least one second gear stage may be configured for providing at least one gear ratio that is different to 1. The at least one second gear stage may be configured for providing a plurality of gear ratios, e.g. two gears, three gears, or more, to be selected. For example, another gearbox or shifting mechanism may be provided between the pedal crank structure and the third interface, between the third interface and the further driver, or between the pedal crank structure and the further driver. The at least one second gear stage may be integrated in the powertrain. This means that a greater variety of use scenarios can be realized.

It may be provided that a second motor is connected to the pedal crank structure, the third interface, and/or the further driver. It may be provided that a/the second motor is connected to the output structure and/or a/the wheel hub of the pedal vehicle. The second motor may be integrated in the powertrain or arranged externally therefrom, particularly externally from the power split device. The second motor may be connected via at least one gear stage, particularly via the at least one first gear stage or the at least one second gear stage. The second motor may provide assistance to the user and/or may enable recuperation.

The objects are further solved by a method, which method is provided in order to accelerate a/the pedal vehicle with the powertrain. The method may comprise providing the user torque input, the user torque input at least partially received by the third interface and at least partially forwarded to the first interface in the first rotational direction. The method may comprise, particularly afterwards/during or after/during providing the user torque input, exerting torque on the driver by means of the motor in the first rotational direction to be at least partially received by the first interface and particularly with the output structure starting to rotate in the first rotational direction. This method provides a parallel hybrid user assistance, e.g. for take-off.

The method may comprise changing the direction of rotation of the motor from the first to the second rotational direction, especially when the pedal vehicle has a speed of or above 0 km/h, especially between 0 and 45 km/h, particularly between 1 and 45 km/h. 'km/h' is a unit meaning kilometers per hour, also known as 'kph'. Changing the direction of rotation can provide a change in mode of operation, e.g. from 'parallel mode' to 'PSD mode' or vice versa. Changing may be conducted at a speed above 1 km/h or above 2 km/h or above 4 km/h. Changing may be conducted at a speed of up to 25 km/h or up to 15 km/h or up to 10 km/h. Changing may be conducted at low speed or shortly after take-off of the pedal vehicle such that speeding up the pedal vehicle at low speeds is assisted in parallel mode and then PSD mode is activated. Thereby, an ergonomic assistance may be provided.

The motor(s) may be controlled by means of a control device. The powertrain may comprise the control device. The control device may have a PI controller or PID controller. The control device may be configured for controlling the motor(s) to selectively rotate in the first rotational direction, e.g. for providing the parallel mode, or in the second rotational direction, e.g. for providing the PSD mode. The control device may be configured for controlling the motor in at least one of speed control and torque control. The powertrain may comprise a torque sensor and/or a speed sensor. The control device may be configured for receiving at least one of a torque signal and a speed sensor from a respective sensor and for controlling based thereon. The motor(s) may be controlled as a function of cadence, user input torque and/or speed of the pedal vehicle. Alternatively or additionally, the motor(s) may be controlled as a function of user settings, support level requested by the user, kickback with the pedals, or the like.

The control device may control the motor in speed control, particularly when in PSD mode or when the motor rotates in the second rotational direction. The control device, e.g. the PI controller or PID controller, may control the motor to provide a respective torque to have the required speed. The respective torque depends at least substantially on user torque input, which is periodic, i.e. in dead centers, e.g. with pedal cranks oriented vertically, there is minimal torque from the user, and/or in max torque position, e.g. with pedal cranks oriented horizontally, the motor is controlled to have a/the maximum torque. Especially during take-off, e.g. when the terrain is uphill or inclined, the PSD mode or motor rotation in the second rotational direction may not be beneficial as the parallel mode or motor rotation in the first rotational direction, for example since the motor substantially cannot help the user to overcome the dead centers.

The control device may control the motor in torque control, particularly when in parallel mode or when the motor rotates in the first rotational direction. When in torque control, the motor can maximum give support also when the user is passing through dead centers. In this way, a take-off, e.g. when the terrain is uphill or inclined, can be much smoother relative to no rotation or second rotational direction rotation of the motor or speed control of the motor.

For a single motor application, e.g. in case the pedal vehicle or the powertrain merely comprises the motor but not the second motor and/or not another motor configured for interacting/cooperating with the user input torque and/or configured for providing assistance/propulsion, the parallel mode may be mandatory or provided as standard, and the PSD mode an option to be selected. The single motor application may include that the powertrain only includes the motor as the only motor.

For a two motor application, e.g. in case the pedal vehicle or the powertrain comprises the motor and the second motor, the parallel mode can help to overcome the typically weak take-off performance in PSD mode when there is no kinetic energy from the pedal vehicle and the user mass yet. Thus, in such an application, the PSD mode and the parallel mode may be alternatives, e.g. none of them mandatory or standard. The two motor application may include that the powertrain has at least said motor and said second motor or exclusively has said motor and said second motor.

For said changing, the motor may stop to exert torque in the first rotational direction and may start to exert torque in the second rotational direction particularly after stopping. The torque exertion may be inverted at any time, independent from the motor speed or its direction of rotation. The motor may not stop and start in a literal sense, but rather change its direction of rotation and/or direction of torque exertion, optionally including that the speed of the motor may become zero at some point while its acceleration may be different from zero.

The objects are further solved by a method provided to operate the powertrain. The method is particularly provided in order to steplessly change a gear ratio effective between the pedal crank structure and the output structure of a/the pedal vehicle with the powertrain. It may be provided that the first interface is rotating in the first rotational direction. It may be provided, particularly afterwards, that the motor is rotating in the second rotational direction and is accelerating or decelerating in speed. Alternatively or additionally, the method may include that the motor rotates in the second rotational direction first and afterwards in the first rotational direction. The method may provide assistance or support to the user, adaption of cadence, and/or adaption of the gear ratio.

The objects are further solved by a pedal vehicle including the powertrain, wherein a/the frame member of the powertrain is fixedly arranged on the pedal vehicle. The powertrain may be configured as a rear wheel unit with at least one of the driver and the further driver arranged to rotate substantially coaxial with a rear wheel of the pedal vehicle. Alternatively or additionally, the powertrain may be configured as a mid-drive unit with at least one of the driver and the further driver arranged to rotate substantially adjacent to the pedal crank structure.

The objects are further solved by a use of a motor in a/the powertrain for a/the pedal vehicle.

With respect to the use, it may be that a first rotational direction of the motor provides a substantially direct connection for transfer of torque, particularly power, between the motor and an output structure of the powertrain, the first rotational direction particularly providing the 'parallel mode' as named herein. Particularly, the first rotational direction might be used for a parallel mode where a user torque input, particularly power, is transferred substantially directly to a wheel hub and the motor torque or power is transferred substantially directly to the wheel hub. Particularly, the first rotational direction might be used for the parallel mode where substantially any motor torque or power can be forwarded to the output structure to provide parallel hybrid assistance. The parallel mode might be used at speeds of the pedal vehicle of 0 km/h, e.g. at take-off.

With respect to the use, it may be that a second rotational direction of the motor provides an indirect connection for transfer of torque, particularly power, between the motor and the output structure, namely via a/the power split device, particularly three-way power split device, by which a/the user torque input, particularly power, is received and by which the torque or power from the motor and the user torque input or power are forwarded to the output structure, the second rotational direction particularly providing the 'PSD mode' as named herein. Particularly, the second rotational direction might be used for the CVT or PSD mode where the speed of rotation of the motor affect a gear ratio the user experiences and furthermore where the motor torque can assist the user. The second rotational direction might be used at speeds of the pedal vehicle of more than 0 km/h, e.g. after take-off and particularly below 10 km/h.

These and other aspects of the invention will be apparent from and elucidated with reference to the implementations / embodiments described hereinafter. In the present disclosure the word 'or' may be understood as and replaced by 'and/or'.

In the drawings:
Fig. 1 shows a first embodiment of a powertrain for a pedal vehicle in a section; and
Fig. 2 shows a second embodiment of a powertrain for a pedal vehicle in a schematic section.

### Description of implementations

The description contains procedural or methodical aspects upon describing structural features of the drive; the structural features can be understood well in that way. It is emphasized to the reader that such structural features can be lifted from the described context without hesitation or the question of an intermediate generalization to form aspects of the invention. It is also emphasized to the reader that any the structural features described in the following can be understood as individual aspects of the invention to distinguish from known solutions, despite being possibly lifted from the context.

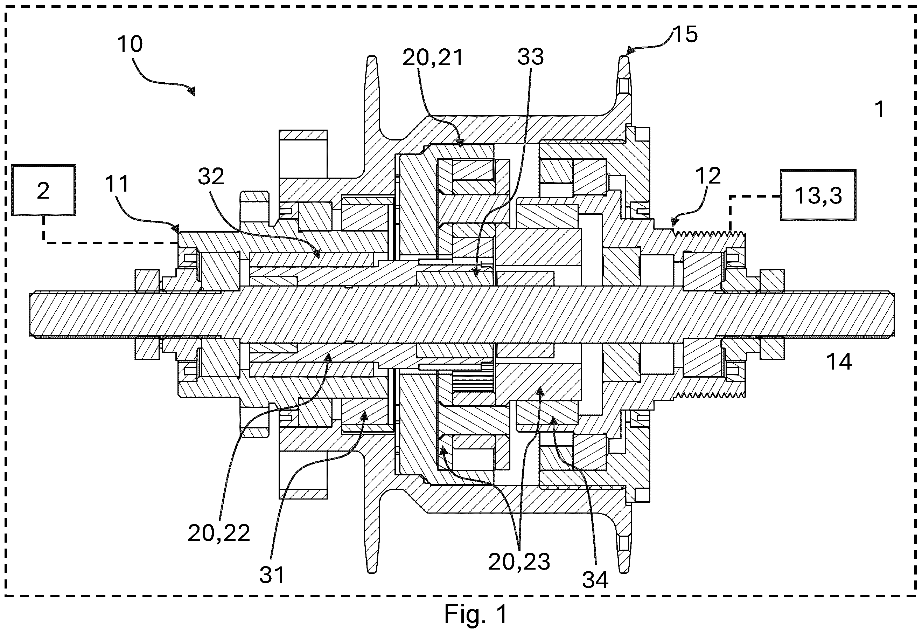

**Fig. 1** shows a powertrain 10 for a pedal vehicle 1, the powertrain 10 comprising a three-way power split device 20 with a first 21, a second 22 and a third 23 interface. The power split device 20 is a planetary gearbox. The first interface 21 includes a ring gear, the second interface 22 includes a sun gear, and the third interface 23 includes a planet carrier holding planet gears that mesh with the ring gear and the sun gear.

The powertrain 10 comprises a driver 11 connected to or driven by a motor 2. The driver 11 is connected by means of a first unidirectional clutch arrangement 31 to/with the first interface 21, particularly via an output structure 15. The first interface 21 is connected to the output structure 15. As such, the motor 2 can exert torque on the first interface 21 only in a first rotational direction. The first unidirectional clutch arrangement 31 only transmits torque in the first rotational direction and does not transmit torque in a second rotational direction.

The driver 11 is connected by means of a second unidirectional clutch arrangement 32 to the second interface 22, in this case to the sun gear. As such, the motor 2 can exert torque on the second interface 22 only in the second rotational direction. The second unidirectional clutch arrangement 32 only transmits torque in the second rotational direction and does not transmit torque in the first rotational direction.

The powertrain 10 comprises a third unidirectional clutch arrangement 33 arranged in the powertrain 10 such that a user torque input can exert torque on the first interface 21, here the ring gear, in the first rotational direction, particularly with the third unidirectional clutch arrangement 33 being locked.

The powertrain 10 comprises a further driver 12 connected to a pedal crank structure 13. The further driver 12 is connected by means of the fourth unidirectional clutch arrangement 34 to the third interface 23, in this case the planet carrier. The fourth unidirectional clutch arrangement 34 connects the pedal crank structure 13 and the third interface 23 such that the user torque input can be directed in the first rotational direction.

The pedal crank structure 13 is configured to receive the user torque input and forward the user torque input to the third interface 23 in the first rotational direction.

Here, the third unidirectional clutch arrangement 33 is configured for transmitting torque, based on the user torque input, to a frame member 14 of the powertrain 10 to which the second interface 22 is connected by means of the third unidirectional clutch arrangement 33. When the user provides the user torque input, the third unidirectional clutch arrangement 33 and the second interface 22 may stand still together with the frame member 14, due to the third unidirectional clutch arrangement 33 being locked, while torque is applied thereto via arrangement 33.

The third unidirectional clutch arrangement 33 may be configured for transmitting torque, based on the user torque input, to the first interface 21, wherein the third unidirectional clutch arrangement 33 may be arranged for particularly direct connection between the third 23 and the first 21 interface.

The motor 2 is arranged external to the output structure 15 and is connected by means of a transmission means, such as gears, a chain or a belt, to the driver 11. Optionally, the motor 2 can be arranged integrated with or in the output structure 15.

Each of the unidirectional clutch arrangements 31, 32, 33, 34 may include a bearing or may be provided as a one-way bearing. Each of the unidirectional clutch arrangements 31, 32, 33, 34 may include a unidirectional clutch and a bearing in an integrated manner.

Particularly, the drivers 11, 12, the pedal crank structure 13, the output structure 15, the interfaces 21, 22, 23, and/or the unidirectional clutch arrangements 31, 32, 33, 34, can rotate in parallel to one another, especially coaxially, and are rotatably arranged relative to one another typically by means of bearings. The second 22 and the third 23 interfaces are rotatably arranged on the frame member 14 by means of bearings. The drivers 11, 12 are rotatably arranged on the frame member 14 by means of bearings. The output structure 15 is directly coupled to the first interface 31 to rotate therewith. The first interface 31 or the output structure 15 is rotatably arranged on the driver 11 and on the further driver 12 by means of bearings.

A first gear stage may be arranged for connection between the output structure 15 and a wheel hub of the pedal vehicle 1, wherein the first gear stage is configured for providing at least one gear ratio that is different to 1 and for providing a plurality of gear ratios to be selected. The wheel hub is not shown in detail in Fig. 1.

A second gear stage may be arranged to connect at least two of: the pedal crank structure 13, the third interface 23, and the further driver 12, wherein the second gear stage is configured for providing at least one gear ratio that is different to 1 and particularly for providing a plurality of gear ratios to be selected.

A second motor may be provided that is connected to the pedal crank structure 13, the third interface 23, and/or the further driver 12.

Alternatively, a second motor may be provided that is connected to the output structure 15 and/or the wheel hub.

Alternatively, a second motor may be provided that is configured to drive a further wheel hub and/or is configured to drive a different wheel than the first motor.

The second motor is preferably connected via a gear stage, e.g. the output of the second motor is connected to the gear stage, and the output of the gear stage is further connected.

The pedal vehicle 1 typically includes the powertrain 10 with the frame member 14, which frame member 14 fixedly is arranged on the pedal vehicle 1. The powertrain 10 is either configured as a rear wheel unit with at least one of the driver 11 and the further driver 12 arranged to rotate substantially coaxial with a rear wheel 2 of the pedal vehicle 1, or as a mid-drive unit with at least one of the driver 11 and the further driver 12 arranged to rotate substantially adjacent to the pedal crank structure 13.

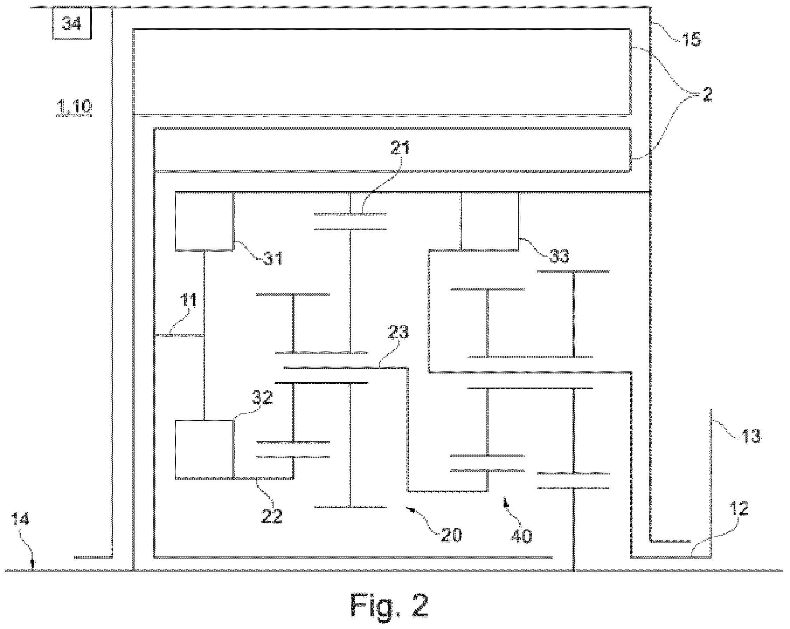

**Fig. 2** shows a second embodiment of a powertrain 10 for a pedal vehicle 1. The powertrain 10 is installed in the pedal vehicle 1. The powertrain 10 comprises a motor 2, a driver 11, a further driver 12, a pedal crank structure 13 for receiving user torque input, a frame member 14 an output structure 15, a three-way power split device 20 with a first 21, a second 22 and a third 23 interface, and a first 31, a second 32, a third 33, and a fourth 34 unidirectional clutch arrangement. The powertrain 10 can be described as follows.

The first interface 21 has a ring gear and is connected to the output structure 15, the second interface 22 has a sun gear, and the third interface 23 has a planet carrier holding planet gears that mesh with the ring gear and the sun gear.

The motor 2 is integrated in the powertrain 10, particularly radially inside an output structure 15. A stator of the motor 2 is fixed to the frame member 14 that is meant to be fixed. Here, radially inside the stator, a rotor of the motor 2 is arranged.

The driver 11 is connected to the motor 2, particularly to the rotor of the motor. The driver 11 is connected, here by means of or via the first unidirectional clutch arrangement 31, to the first interface 21 such that the motor 2 can exert torque, e.g. at least substantially directly, on the first interface 21 only in a first rotational direction.

The driver 11 is connected, by means of or via a second unidirectional clutch arrangement 32, to a second interface 22 such that the motor 2 can exert torque, e.g. at least substantially directly, on the second interface 22 only in a second rotational direction.

In the first rotational direction the motor 2 can drive the first interface 21 in order to provide a parallel mode. In the second rotational direction the motor 2 can drive the second interface 22 to provide a PSD mode, wherein the unidirectional clutch arrangements 31, 32 provide respective coupling or uncoupling as a function of the direction of rotation of the motor 2.

The further driver 12 is connected to the pedal crank structure 13 and to the third interface 23. The pedal crank structure 13 can forward the user torque input to the third interface 23, e.g. via a second gear stage 40 as shown, in the first rotational direction.

Particularly, the second gear stage 40 is arranged to connect the further driver 12 and the third interface 23, typically the second gear stage 40 providing a gear ratio different to 1.

The powertrain 10 further comprises a third unidirectional clutch arrangement 33 arranged such that the user torque input can exert torque on the first interface 21 in the first rotational direction by means of the third unidirectional clutch arrangement 33 and/or with the third unidirectional clutch arrangement 33 being locked.

The third unidirectional clutch arrangement 33 is configured for transmitting torque, based on the user torque input, to the first interface 21. The third unidirectional clutch arrangement 33 is arranged for particularly direct connection between the third 23 and the first 21 interface.

The motor 2 is arranged integrated with or in the output structure 15. Particularly, the stator is fixedly arranged relative to the frame member 14 and the rotor is coupled to the driver 11 to rotate therewith. The stator can drive the rotor. The driver 11 is connected to the motor 2 to be driven by the motor 2.

The power split device 20 is a planetary gearbox, the first interface 21 includes a ring gear, the second interface 22 includes a sun gear, and the third interface 23 includes a planet carrier holding planet gears that mesh with the ring gear and the sun gear. Here, a larger diameter of the planets mesh with the first interface 21 and a smaller diameter of the planets mesh with the second interface 22.

The fourth unidirectional clutch arrangement 34 may connect the powertrain 10, particularly the output structure 15, to a wheel hub of the pedal vehicle 1. The fourth unidirectional clutch arrangement 34 may be arranged to transmit torque to or receive torque from a sprocket. For example, the fourth unidirectional clutch arrangement 34 is configured to operate like a bicycle freewheel, e.g. as in a conventional single speed bicycle. The fourth unidirectional clutch arrangement 34 may realize a coasting function. The fourth unidirectional clutch arrangement 34 may be optional.

Any one of the shown or described powertrains 10 can be used to conduct one or more methods to operate the respective powertrain 10.

A method in order to accelerate a pedal vehicle 1 with the powertrain 10 may comprise providing the user torque input or power. The user torque input or power can at least partially be received by the third interface 23 and at least partially be forwarded to the first interface 21 in the first rotational direction. The method may comprise exerting torque or power on the driver 11 by means of the motor 2 in the first rotational direction to be at least partially received by the first interface 21 and particularly with the output structure 15 starting to rotate in the first rotational direction. The method may comprise, when the pedal vehicle 1 has a speed between 0 and 45 km/h, changing the direction of rotation of the motor 2 from the first to the second rotational direction, wherein the motor 2 stops to exert torque in the first rotational direction and starts to exert torque in the second rotational direction. User power and motor power can be summarized at the first interface 21.

It is possible that, particularly when the pedal vehicle 1 has a speed between 0 and 45 km/h, the direction of rotation of the motor 2 from the first to the second rotational direction is being changed, particularly wherein the motor 2 stops to exert torque or power in the first rotational direction and starts to exert torque or power in the second rotational direction. User power and motor power can be summarized substantially in the power split device 20 to be forwarded to the first interface 21.

A method in order to steplessly change a gear ratio effective between the pedal crank structure 13 and the output structure 15 of a pedal vehicle 1 with the powertrain 10 may be provided. The first interface 21 may be rotating in the first rotational direction, and particularly afterwards the motor 2 may be rotating in the second rotational direction and may be accelerating or decelerating in speed. Particularly, the motor may change its direction of rotation which can provide that the gear ratio can be steplessly changed.

Shown and described is a use a motor 2 in a powertrain 10 for a pedal vehicle 1, wherein a first rotational direction of the motor 2 provides a substantially direct connection for transfer of torque between the motor 2 and an output structure 15 of the powertrain 10, and/or wherein a second rotational direction of the motor 2 provides an indirect connection for transfer of torque between the motor 2 and the output structure 15, particularly via a three-way power split device 20 by which a user torque input is received and by which the torque from the motor 2 and the user torque input are forwarded to the output structure 15.

### Reference signs list

- 1: Pedal vehicle
- 2: Motor
- 3: Second motor

- 10: Powertrain
- 11: Driver
- 12: Further driver
- 13: Pedal crank structure
- 14: Frame member
- 15: Output structure
- 16: wheel hub

- 20: Power split device
- 21: First interface, e.g. ring gear
- 22: Second interface, e.g. sun gear
- 23: Third interface, e.g. planet carrier

- 31: First unidirectional clutch arrangement
- 32: Second unidirectional clutch arrangement
- 33: Third unidirectional clutch arrangement
- 34: Fourth unidirectional clutch arrangement

## Claims

1. Powertrain (10) for a pedal vehicle (1), comprising
a three-way power split device (20) with a first (21), a second (22) and a third (23) interface,
a motor (2) configured to rotate in a first and in a second rotational direction,
a driver (11) connected to the motor (2) and connected, by means of a first unidirectional clutch arrangement (31), to the first interface (21) to which an output structure (15) is connected such that the motor (2) can exert torque on the first interface (21) only by rotation in the first rotational direction, wherein the driver (11) is connected, by means of a second unidirectional clutch arrangement (32), to the second interface (22) such that the motor (2) can exert torque on the second interface (22) only by rotation in the second rotational direction, and
a further driver (12) connected to a pedal crank structure (13) and to the third interface (23), wherein the pedal crank structure (13) is configured to receive a user torque input and forward the user torque input to the third interface (23) in the first rotational direction,
**characterized by**
a third unidirectional clutch arrangement (33) arranged in the powertrain (10) such that the user torque input can exert torque on the first interface (21) in the first rotational direction.

2. Powertrain (10) according to the preceding claim, wherein
the third unidirectional clutch arrangement (33) is configured for transmitting torque, based on the user torque input,
to the first interface (21), wherein the third unidirectional clutch arrangement (33) is arranged for connection between the third interface (23) and the first interface (21), or
to a frame member (14) of the powertrain (10) to which the second interface (22) is connected by means of the third unidirectional clutch arrangement (33).

3. Powertrain (10) according to the preceding claim, wherein
The power split device (20) includes or is a planetary gearbox,
the first interface (21) includes a ring gear,
the second interface (22) includes a sun gear, and
the third interface (23) includes a planet carrier particularly holding planet gears that mesh with the ring gear and the sun gear.

4. Powertrain (10) according to the preceding claim, comprising
a fourth unidirectional clutch arrangement (34) connecting the further driver (12) and the third interface (23) such that the user torque input can be directed in the first rotational direction.

5. Powertrain (10) according to one of the preceding claims, wherein
the motor (2) is arranged external to the output structure (15) and connected by means of a transmission means, such as gears, a chain or a belt, to the driver (11).

6. Powertrain (10) according to one of the preceding claims, wherein
the motor (2) is arranged integrated with or in the output structure (15).

7. Powertrain (10) according to one of the preceding claims, wherein
at least one first gear stage is arranged for connection between the output structure (15) and a wheel hub (16), and
the at least one first gear stage configured for providing at least one gear ratio that is different to 1 and particularly for providing a plurality of gear ratios to be selected.

8. Powertrain (10) according to one of the preceding claims, wherein
at least one second gear stage (40) is arranged to connect at least two of:
the pedal crank structure (13), the third interface (23), and the further driver (12), and
the at least one second gear stage (40) is configured for providing at least one gear ratio that is different to 1 and particularly for providing a plurality of gear ratios to be selected.

9. Powertrain (10) according to one of claims 1 to 8,
wherein a second motor (3) is connected to at least one of:
the pedal crank structure (13), the third interface (23), and the further driver (12).

10. Powertrain (10) according to one of claims 1 to 8,
wherein a second motor (3) is connected to at least one of: the output structure (15) and a/the wheel hub (16).

11. Powertrain (10) according to one of the preceding two claims,
wherein the second motor (3) is connected via at least one gear stage, particularly via the at least one first gear stage or the at least one second gear stage (40).

12. Method to operate a powertrain (10) according to one of claims 1 to 11,
the method provided in order to accelerate a pedal vehicle (1) with the powertrain (10), comprising
providing the user torque input, the user torque input at least partially received by the third interface (23) and at least partially forwarded to the first interface (21) in the first rotational direction, and
exerting torque on the driver (11) by means of the motor (2) in the first rotational direction to be at least partially received by the first interface (21) and particularly with the output structure (15) starting to rotate in the first rotational direction, and optionally
when the pedal vehicle (1) has a speed between 0 and 45 km/h, changing the rotational direction of rotation of the motor (2) from the first to the second rotational direction, wherein the motor (2) stops to exert torque in the first rotational direction and starts to exert torque in the second rotational direction.

13. Method to operate a powertrain (10) according to one of claims 1 to 11,
the method provided in order to steplessly change a gear ratio effective between the pedal crank structure (13) and the output structure (15) of a pedal vehicle (1) with the powertrain (10), wherein
the first interface (21) is rotating in the first rotational direction, and
the motor (2) is rotating in the second rotational direction and is accelerating or decelerating in rotational speed.

14. Pedal vehicle (1) including a powertrain (10) according to one of claims 1 to 11, wherein a/the frame member (14) of the powertrain (10) is fixedly arranged on the pedal vehicle (1), wherein the powertrain (10) is configured
as a rear wheel unit with at least one of the driver (11) and the further driver (12) arranged to rotate substantially coaxial with a rear wheel (2) of the pedal vehicle (1), or
as a mid-drive unit with at least one of the driver (11) and the further driver (12) arranged to rotate substantially adjacent to the pedal crank structure (13).

15. Use of a motor (2) in a powertrain (10) for a pedal vehicle (1), wherein
a first rotational direction of the motor (2) provides a substantially direct connection for transfer of torque between the motor (2) and an output structure (15) of the powertrain (10), and
a second rotational direction of the motor (2) provides an indirect connection for transfer of torque between the motor (2) and the output structure (15), namely via a three-way power split device (20) by which a user torque input is received and by which the torque from the motor (2) and the user torque input are forwarded to the output structure (15).
